# EUROPEAN PATENT SPECIFICATION

(11) **EP 1 275 467 B1**
(45) Date of publication and mention of the grant of the patent: **08.12.2004**
(21) Application number: 01906341.1
(22) Date of filing: 27.02.2001
(51) Int. Cl.: B23K 35/26, H01F 27/28

(54) **UNLEADED SOLDER ALLOY AND ELECTRONIC COMPONENTS USING IT**
BLEIFREIE LÖTLEGIERUNG UND DEREN VERWENDUNG IN ELEKTRONISCHEN BAUELEMENTEN
ALLIAGE DE BRASAGE SANS PLOMB ET COMPOSANTS ELECTRIQUES L'UTILISANT

(43) Date of publication of application: 15.01.2003
(73) Proprietor: Sumida Corporation, Tokyo 103-8589 (JP); Nihon Genma Mfg. Co. Ltd., Yodogawa-ku, Osaka-shi, Osaka 532-0036 (JP)
(72) Inventor: IZUMIDA, Koichi Sumida Technologies Incorporated, Chuo-ku Tokyo 103-8589 (JP); TAKANO, Yuki Sumida Technologies Incorporated, Chuo-ku Tokyo 103-8589 (JP); ABE, Hitoshi, Chuo-ku Tokyo 103-8589 (JP); MORIBAYASHI, Toshiyuki Nihon Genma MFG. Co. Ltd., Yodogawa-ku Osaka 532-0032 (JP); HAGIO, Koichi Nihon Genma MFG. Co. Ltd., Yodogawa-ku Osaka 532-0032 (JP); TAKENAKA, Junichi Nihon Genma MFG. Co. Ltd., Yodogawa-ku Osaka 532-0032 (JP)
(74) Representative: HOFFMANN EITLE
(86) International application number: PCT/JP2001/001453
(87) International publication number: WO 2002/068146

(56) References cited:
- JP-A- 1 218 794
- JP-A- 11 077 367
- JP-A- 11 320 177
- US-A- 4 643 875
- US-A- 5 102 748
- US-A- 5 817 194
- PATENT ABSTRACTS OF JAPAN vol. 018, no. 679 (M-1728), 21 December 1994 (1994-12-21) & JP 06 269983 A (TOKURIKI HONTEN CO LTD), 27 September 1994 (1994-09-27)

## Description

### Technical Field

The present invention relates to a solder alloy that does not contain lead, namely lead-free solder alloy, and particularly to an electronic component using this lead-free solder alloy.

### Background Art

In the related art, tin (Sn) - lead (Pb) type solder alloy has often been used as solder for electrical connections within an electronic component or for connecting electronic components to a printed circuit boad.

In recent years, the toxicity of lead has been seen as a problem, and the legal restriction of use of lead has been investigated. For this reason, the development of solder alloy having an extremely low lead content, or lead-free solder alloy having no lead content whatsoever to replace Sn - Pb type solder alloy has been hastened.

As an example of a lead-free solder alloy, there are the disclosures in Japanese Patent No. 3036636 with publication number JP-A-61222699, and USP No. 4758407.

Japanese Patent No. 3036636 relates to a lead-free solder alloy for bonding electronic components to a printed circuit boad of an electronic device, and has part of a copper component of tin(Sn) - copper (Cu) alloy replaced by nickel (Ni) with the compositional ratio being Cu: 0.05 - 2.0 weight %, Ni: 0.001 - 2.0 weight % and the remainder being Sn. The purpose of this is to increase mechanical strength of the bonding sections.

Also, USP No. 4758407 proposes use of copper pipe and brass pipe as mains water pipe, in order to prevent lead and cadmium leaking into drinking water from lead pipes used in mains water pipes, and the invention of this patent relates to a solder alloy for welding these copper pipes and brass pipes to connecting joints in order to join them together for extension purposes.

The main component of this solder alloy is tin(Sn) or tin (Sn) and Antimony (Sb), and neither solder contains lead (Pb) or cadmium (Cd).

Here, the composition of the solder alloy having tin as a main component is Sn: 92.5 - 96.9 wt%, Cu:3.0 - 5.0 wt%, Ni: 0.1-0 2.0 wt%, Ag: 0.0 - 5.0 wt%.

Also, the composition of the solder alloy having tin/antimony as a main component is Sn: 87.0 - 92.9 wt%, Sb: 4.0 - 6.0 wt%, Cu: 3.0 - 5.0 wt%, Ni: 0.0 - 2.0 wt%, Ag: 0.0-5.0 wt%.

The melting temperature of the solder alloy of Japanese Patent No. 3036636 is around 230°C, and this solder alloy, as mentioned above, is for bonding electronic components to conductive portions of a printed circuit boad , which means that the melting temperature (temperature at the time of reflow) is preferably as low as possible.

Also, the melting temperature of the solder alloy of USP No. 4758407 is from around 240°C to around 330°C, but this solder alloy is used for welding together copper pipe or brass pipe or their joints used as water supply pipes in, for example, a domestic water heater, which means that when considering operability at the time of melting, the melting temperature of this alloy solder is preferably low.

Inside the electronic components there are high frequency coils or transformers formed by winding linear or substantially belt-shaped electrical conductors (referred to below as windings). Wires that have an insulating coat formed by coating a copper core with enamel or urethane are used as these coil windings.

With the coils, it is necessary to attach solder in order to electrically connect each of the two ends of the winding wound on a bobbin etc., namely a starting end and a finishing end, to electrodes such as terminal pins provided on the bottom of the bobbin.

In order to attach the solder to the terminals and carry out electrical connection, it is necessary to remove the insulating coat from the tip of the wire. Generally, as a method of removing the insulating coat, there is a method of mechanically scraping off the coat, a method of dissolving the coat using chemicals, and a method of decomposing or dissolving the coat using high temperature heating.

It has been common practice in the related art to adopt the method using high temperature heating.

For example, in order to manufacture a coil, each of a starting end and a finishing end of a winding are wrapped around electrode sections such as terminal pins provided in the bottom of a bobbin etc., followed by dipping the wrapped sections into solder liquid that has been heated to a high temperature. Specifically, a method is generally used where the insulating coat of the windings is removed simultaneously with attaching the solder.

At the time of solder attachment, when using lead-free solder that does not contain a copper component, while the tip of the electrode is being brought into contact with the molten solder (solder liquid), a phenomenon known as "copper erosion" arises where copper that is the base material is dissolved in the solder liquid and made thinner. This copper erosion phenomenon is a major factor causing wire bursts in electronic components such as the above described coil.

With this phenomenon, the amount of copper dissolved in the solder liquid increases as the melting temperature of the solder increases, and the rate of copper dissolving also increases with increased melting temperature. Accordingly, it is easy for the above described open-circuit problems to occur if the diameter of an electrical wire tapers off. On the other hand, in order to prevent the copper erosion phenomenon, means for attaching microscopic amounts of copper to the lead-free solder alloy is generally known. However, if the copper content becomes excessive, the viscosity of the molten solder (solder liquid) increases, and a phenomena where more solder than is necessary becomes attached to sites to which solder is to be attached so that solder hangs down in the shape of icicles, causing a bridge phenomenon where excess solder straddles across adjacent sites. Besides this, if the copper content becomes excessive, there are problems such as the plating weight (weight of attached solder) becoming non-uniform, and wetting becoming poor.

Also, if the melting temperature of the molten solder is low, an insulating coat material of enamel or urethane is not completely dissolved, which is the main cause of incomplete solder attachment and poor continuity etc. The melting temperature of the lead-free solder alloy tends to increase with increase in the copper content.

### Disclosure of the Invention

A first aspect of the present invention provides a lead-free solder alloy containing from 5.3 to 7.0 wt% copper (Cu), from 0.1 to less than 0.5 wt% nickel, and the remainder being tin (Sn). A second aspect of the present invention provides an electronic component, having a core formed from copper or an alloy containing copper that uses conductors having the cores coated with an insulating coat, the conductors, or the conductors and sites other than the electronic cornponent which are attached by a lead free solder alloy containing the above described 5.3 to 7.0 wt% copper (Cu) from 0.1 to less than 0.5 wt% nickel (Ni) and the remainder being tin (Sn), and in this way, open circuit faults caused by the copper erosion phenomenon of the above described electronic component are prevented.

A third aspect of the present invention provides a method of producing the electronic component wherein at the time of attaching solder to the electronic component, the insulating coat of the conductors is reliably dissolved by setting the melting temperature of the lead-free solder to from 400°C to 480°C.

### Brief Description of the drawings

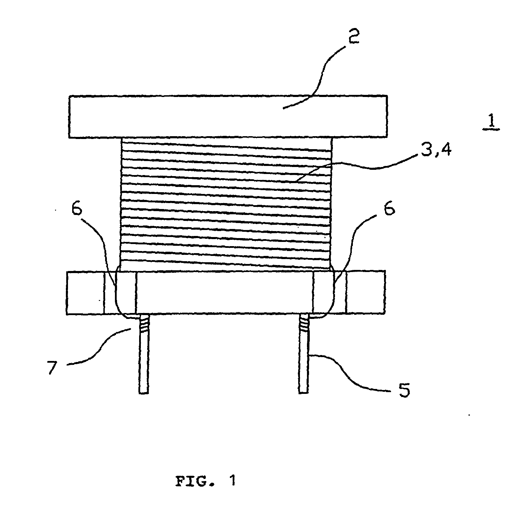

Fig. 1 is an explanatory drawing showing one example of a coil component.

### Preferred Mode of Embodying the Invention

As described previously, inside the electronic components there are high frequency coils or transformers (hereafter referred to as coils) formed by winding linear or substantially belt-shaped electrical conductors (referred to below as windings). Wires that have an insulating film formed by coating a copper core with enamel or urethane are used as these coil windings.

One example of a coil using wires that have an insulating film formed by coating a copper core with enamel or urethane as the coil windings is shown in Fig. 1.

In Fig. 1, reference numeral 1 is a coil, 2 is a bobbin, and in this embodiment they are integrally formed from ferrite core. Reference numeral 3 is winding material formed by coating a copper core with an insulating coat of enamel or urethane, 4 is a winding section having the winding material 3 wound around a body section of the bobbin 2, 5 is a terminal pin embedded in the bottom of the bobbin 2, 6, 6 are the starting end and finishing end lead out terminal of the winding material and electrically connected to the terminal pin 5 by being wrapped around.

The terminal pin 5 is for electrically connecting the coil 1 to circuit conductors of a circuit substrate (not shown). An HCP wire having copper plating coated on the surface of a steel wire is commonly used as the terminal pin 5.

Here, in order to electrically connect the wiring section 4 and the terminal pin 5, it is necessary to remove the insulating coat of a tip end of a lead out terminal 6 constituting a wrapping section 7. As mentioned above, as a method of removing the insulating coat of the winding material 3, there is a method of mechanically scraping off the coat, a method of dissolving the coat using chemicals, and a method of decomposing or dissolving the coat using high temperature heating, but in the present invention the high temperature heating method is adopted.

Specifically, after wrapping the lead out terminal 6 of the winding section wound around the body section of the bobbin 2, coating material of the insulation coated conductors is removed by the heat of the liquid solder by dipping the wrapping section into a solder bath.

The inventor carried out experiments with coils using lead-free solder having copper added to tin, and it was not possible to completely remove enamel coating with a solder attachment temperature of less than 350°C.

### Practical example

Table 1 contains measurement results showing a relationship between solder attachment temperature when enamel coated copper wire having a diameter of 0.4 mm is dipped in a molten solder liquid, and shows a relationship between the compositional content of the solder alloy and solder attachment temperature, extent of copper erosion, and the condition of the solder attachment surface.

In table 1, "extent of copper erosion" has the conductor diameter of the enamel coated copper wire before solder attachment (0.4 mm) as a reference, with a reduction of 10% being "large", a reduction of from 5% to less than 10% being "medium", and a reduction of from 0 to less than 5% being "small".

Also, "enlarged" means that it was possible to increase the diameter of the copper wire compared to the reference value.

**Table 1**

| Solder Composition (Cu: 4.0 - 8.0 wt%, Ni:0.0 - 0.6 wt%, Sn: remainder) | Solder attachment temperature (°C). | diameter of 0.4 mm enamel coated copper wire after solder attachment (mm) | extent of copper erosion | condition of solder attachment surface |
|---|---|---|---|---|
| Sn-4Cu | 480 | 0.302 | large | |
| Sn-5.3Cu | 480 | 0.343 | large | non-uniform thickness |
| Sn-6Cu | 480 | 0.349 | large | |
| Sn-7Cu | 480 | 0.360 | large | |
| Sn-8Cu | 480 | 0.366 | medium | |
| Sn-4Cu | 450 | 0.345 | large | |
| Sn-5.3Cu | 450 | 0.356 | large | |
| Sn-6Cu | 450 | 0.370 | medium | |
| Sn-7Cu | 450 | 0.391 | small | thickness non-uniform |
| Sn-8Cu | 450 | 0.408 | slightly enlarged | Icicle |
| Sn-4Cu | 400 | 0.385 | medium | |
| Sn-5.3Cu | 400 | 0.370 | medium | |
| Sn-6Cu | 400 | 0.380 | medium | |
| Sn-7Cu | 400 | 0.409 | slightly enlarged | Icicles |
| Sn-8Cu | 400 | 0.417 | enlarged | Icicles |
| Sn-4Cu-0.2Ni | 480 | 0.320 | large | |
| Sn-5.3Cu-0.1Ni | 480 | 0.352 | large | |
| Sn-5.3Cu-0.2Ni | 480 | 0.359 | large | |
| Sn-5.3Cu-0.5Ni | 480 | 0.372 | medium | |
| Sn-5.3Cu-0.6Ni | 480 | 0.374 | medium | |
| Sn-6Cu-0.1Ni | 480 | 0.386 | small | |
| Sn-6Cu-0.2Ni | 480 | 0.382 | small | |
| Sn-6Cu-0.5Ni | 480 | 0.389 | small | |
| Sn-6Cu-0.6Ni | 480 | 0.395 | small | |
| Sn-7Cu-0.1Ni | 480 | 0.382 | small | |
| Sn-7Cu-0.2Ni | 480 | 0.378 | medium | |
| Sn-7Cu-0.5Ni | 480 | 0.395 | small | |
| Sn-7Cu-0.6Ni | 480 | 0.411 | enlarged | |
| Sn-8Cu-0.6Ni | 480 | 0.418 | enlarged | |
| Sn-5.3Cu-0.1Ni | 450 | 0.378 | medium | |
| Sn-5.3Cu-0.2Ni | 450 | 0.379 | medium | |
| Sn-5.3Cu-0.5Ni | 450 | 0.383 | small | |
| Sn-5.3Cu-0.6Ni | 450 | 0.381 | small | |
| Sn-6Cu-0.1Ni | 450 | 0.382 | medium | |
| Sn-6Cu-0.2Ni | 450 | 0.385 | small | |
| Sn-6Cu-0.5Ni | 450 | 0.392 | small | |
| Sn-6Cu-0.6Ni | 450 | 0.399 | small | |
| Sn-7Cu-0.1Ni | 450 | 0.380 | small | |
| Sn-7Cu-0.2Ni | 450 | 0.387 | small | |
| Sn-7Cu-0.5Ni | 450 | 0.395 | small | |
| Sn-7Cu-0.6Ni | 450 | 0.410 | enlarged | Icicles |
| Sn-5.3Cu-0.1Ni | 400 | 0.378 | medium | |
| Sn-5.3Cu-0.2Ni | 400 | 0.384 | small | |
| Sn-5.3Cu-0.5Ni | 400 | 0.387 | small | |
| Sn-5.3Cu-0.6Ni | 400 | 0.387 | small | |
| Sn-6Cu-0.1Ni | 400 | 0.392 | small | |
| Sn-6Cu-0.2Ni | 400 | 0.389 | small | |
| Sn-6Cu-0.5Ni | 400 | 0,390 | small | |
| Sn-6Cu-0.6Ni | 400 | 0.410 | enlarged | |
| Sn-7Cu-0.1Ni | 400 | 0.381 | small | |
| Sn-7Cu-0.2Ni | 400 | 0.392 | small | |
| Sn-7Cu-0.5Ni | 400 | 0.405 | small | |
| Sn-7Cu-0.6Ni | 400 | 0.418 | enlarged | Icicles |
| Sn-8Cu-0.6Ni | 400 | 0.423 | enlarged | Thickness non-uniform |

As is clear from the practical examples of table 1 above, with solder alloy of tin - copper only, the extent of copper erosion increases with decrease in the copper content, for example, in the case of a copper content of 4 wt% and the remainder tin, the diameter of the enamel coated copper wire was reduced by 24.5 %.

Also, if the copper content is increased with solder alloy of tin - copper only, the viscosity of the molten solder increases in the regions where the solder melting temperature is low, causing a plating thickness of the solder attachment sections to become non-uniform, diameter of the enamel coated conductors is enlarged compared to the reference value, and a phenomenon arises where excessive solder hangs down.

Further, with Sn - 7Cu solder alloy with 7 wt% Cu added to the tin, and Sn - 8Cu alloy solder with 8 wt % Cu added to tin, when the melting temperature is 400°C, an icicle phenomenon arises. On the contrary, with solder alloy having 5.3 wt% Cu and 0.2 wt% nickel added to the tin (Sn-5.3Cu - 0.2Ni), the diameter of the enamel coated wire is only reduced by 4% from the reference value, it is possible to make the copper erosion extent extremely small, and wetting is also improved. It is also possible to increase the mechanical strength of the solder attachment sections.

If the added amount of nickel exceeds a specified range in a region where the copper content exceeds a specified amount, a copper - nickel precipitate floats in the molten solder, and since the precipitate adheres to the surface of the solder attachment regions, the solder attachment surface becomes microscopically uneven and ravaged, the thickness of the solder is not uniform, it is more likely that a bridge phenomenon or icicle phenomenon will occur, and wetting deteriorates. It was confirmed that it was easier for these phenomena to occur in a region where the melting temperature of the solder alloy is low.

Next, the number of times solder is attached until the surface luster blackens, when repeatedly attaching solder to a HCP wire of 0.7 mm diameter (manufactured by Fuji Electric wire Company) is shown in table 2.

**Table 2**

| solder composition | solder attachment temperature (°C) | number of times until terminal surface luster blackens when repeatedly attaching solder | icicles generated |
|---|---|---|---|
| Sn-4Cu | 480 | 3 | no |
| Sn-5.3Cu | 480 | 3 | no |
| Sn-6Cu | 480 | 4 | no |
| Sn-7Cu | 480 | 5 | no |
| Sn-8Cu | 480 | 6 | no |
| Sn-5.3Cu | 450 | 5 | no |
| Sn-6Cu | 450 | 6 | no |
| Sn-7Cu | 450 | 9 | no |
| Sn-8Cu | 450 | 14 | no |
| Sn-4Cu | 400 | 4 | no |
| Sn-5.3Cu | 400 | 5 | no |
| Sn-6Cu | 400 | 5 | no |
| Sn-7Cu | 400 | 17 | no |
| Sn-8Cu | 400 | 20 or more | yes |
| Sn-4Cu-0.1Ni | 480 | 4 | no |
| Sn-4Cu-0.2Ni | 480 | 3 | no |
| Sn-5.3Cu-0.1Ni | 480 | 3 | no |
| Sn-6.3Cu-0.2Ni | 480 | 5 | no |
| Sn-5.3Cu-0.5Ni | 480 | 7 | no |
| Sn-5.3Cu-0.6Ni | 480 | 7 | no |
| Sn-6Cu-0.1Ni | 480 | 7 | no |
| Sn-6Cu-0.2Ni | 480 | 9 | no |
| Sn-7Cu-0.1Ni | 480 | 8 | no |
| Sn-7Cu-0.2Ni | 480 | 9 | no |
| Sn-7Cu-0.5Ni | 480 | 10 | no |
| Sn-7Cu-0.6Ni | 480 | 10 | no |
| Sn-8 Cu-0.6Ni | 480 | 15 or more | no |
| Sn-5.3Cu-0.1Ni | 450 | 6 | no |
| Sn-5.3Cu-0.2Ni | 450 | 7 - 20 | no |
| Sn-6Cu-0.1Ni | 450 | 13 | no |
| Sn-6Cu-0.2Ni | 450 | 20 or more | no |
| Sn-7Cu-0.1Ni | 450 | 20 or more | no |
| Sn-7Cu-0.2Ni | 450 | 20 or more | no |
| Sn-5.3Cu-0.1Ni | 400 | 20 or more | no |
| Sn-5.3Cu-0.2Ni | 400 | 20 or more | no |
| Sn-6Cu-0.1Ni | 400 | 20 or more | no |
| Sn-6Cu-0.2Ni | 400 | 20 or more | no |
| Sn-7Cu-0.1Ni | 400 | 20 or more | no |
| Sn-7Cu-0.2Ni | 400 | 20 or more | no |
| Sn-7Cu-0.5Ni | 400 | 20 or more | no |
| Sn-7Cu-0.6Ni | 400 | 20 or more | yes |
| Sn-8Cu-0.6Ni | 400 | 20 or more | yes |

As has been described above, the HCP wire is copper plating coated on a surface of a steel wire, and is used as a terminal pin 5 of the coil of Fig. 1 or as terminal conductors of other electronic components.

Table 2 shows the relationship between the number of times until the copper plate of the HCP wire is peeled away from the steel wire section, which is the undercoat, and the composition of the solder alloy and the temperature at the time of solder attachment, and shows that as the number of times increases, the degree of peeling of the copper plate decreases, in other words, the rate of copper erosion and the amount of copper erosion is reduced.

In particular, it will be understood that in the cases where a moderate amount of nickel has been added, it is unlikely that copper erosion will occur even in a region where the solder attachment temperature is high.

### Industrial Applicability

The lead-free solder alloy of the present invention, as has been described above, is not prone to copper erosion even in a region where solder attachment temperature is high, and it is possible to reduce the amount of copper lost due to the copper erosion.

Accordingly, it is possible to prevent wire burst at the time of attaching solder to an electronic component that uses insulation coated on a copper wire or alloy wire containing copper, and this effect is particularly noticeable with insulation coated conductors of fine diameter.

Also, since it is possible to reliably dissolve the insulating coating material of the insulation coated conductors using high temperature solder attachment, it is possible to prevent bad continuity due to residual insulating coating material.

## Claims

1. A lead-free solder alloy containing from 5.3 to 7.0 wt% copper (Cu), from 0.1 to less than 0.5 wt% nickel (Ni), with a remainder being tin (Sn).

2. An electronic component containing conductors having a wire formed with copper or an alloy containing copper, the wire having an insulating coating, wherein associated conductors, or the conductors and other sites on the electronic component, are attached by the lead-free solder alloy according to claim 1.

3. Method of producing the electronic component according to claim 2, wherein an electronic component is subjected to solder attachment by melting lead-free solder alloy according to claim 1 at a temperature of from 400°C to 480°C.

## Revendications

1. Alliage de brasage sans plomb contenant de 5,3 à 7,0 % en poids de cuivre (Cu), de 0,1 à moins que 0,5 % en poids de nickel (Ni), le reste étant de l'étain (Sn).

2. Composant électronique contenant des conducteurs ayant un fil formé avec du cuivre ou un alliage contenant du cuivre, le fil comportant un revêtement isolant, dans lequel les conducteurs associés ou les conducteurs et autres sites sur le composant électronique sont fixés par un alliage de brasage sans plomb selon la revendication 1.

3. Procédé de production du composant électronique selon la revendication 2, dans lequel un composant électronique est soumis à la fixation par brasage en faisant fondre l'alliage de brasage sans plomb selon la revendication 1 à une température allant de 400 °C à 480 °C.

## Patentansprüche

1. Bleifreie Lötlegierung, die 5,3-7,0 Gew.% Kupfer (Cu), 0,1 bis weniger als 0,5 Gew.% Nickel (Ni) und als Rest Zinn (Zn) enthält.

2. Elektronische Komponente, die Leiter mit einem aus Kupfer oder einer kupferhaltigen Legierung gebildeten Draht aufweisen und der Draht eine isolierende Beschichtung besitzt, worin miteinander verbundene Leiter oder die Leiter und andere Stellen auf der elektronischen Komponente durch die bleifreie Lötlegierung gemäss Anspruch 1 befestigt sind.

3. Verfahren zur Herstellung der elektronischen Komponente gemäss Anspruch 2, worin eine elektronische Komponente einer Lötbefestigung durch Schmelzen der bleifreien Lötlegierung gemäss Anspruch 1 bei einer Temperatur von 400-480°C unterworfen wird.
